(19) **Europäisches Patentamt / European Patent Office / Office européen des brevets**

(11) **EP 4 648 518 A2**

(12) # EUROPEAN PATENT APPLICATION
published in accordance with Art. 153(4) EPC

(43) Date of publication:
**12.11.2025 Bulletin 2025/46**

(21) Application number: **24775177.9**

(22) Date of filing: **20.03.2024**

(51) International Patent Classification (IPC):
*H04W 72/23* (2023.01)  *H04L 5/00* (2006.01)
*H04L 27/26* (2006.01)  *H04W 72/21* (2023.01)
*H04W 84/06* (2009.01)

(52) Cooperative Patent Classification (CPC):
**H04L 5/00; H04L 27/26; H04W 72/21; H04W 72/23; H04W 84/06**

(86) International application number:
**PCT/KR2024/003458**

(87) International publication number:
**WO 2024/196129 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.03.2023 KR 20230038248**

(71) Applicants:
- **Hyundai Motor Company**
  **Seoul 06797 (KR)**
- **Kia Corporation**
  **Seoul 06797 (KR)**
- **INHA University Research and Business Foundation**
  **Incheon 22212 (KR)**

(72) Inventors:
- **SUH, Young Kil**
  **Hwaseong-si, Gyeonggi-do 18280 (KR)**
- **HAHN, Gene Back**
  **Hwaseong-si, Gyeonggi-do 18280 (KR)**
- **HONG, Ui Hyun**
  **Hwaseong-si, Gyeonggi-do 18280 (KR)**
- **LEE, Jeong Su**
  **Hwaseong-si, Gyeonggi-do 18280 (KR)**
- **KIM, Duk Kyung**
  **Seoul 06762 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND DEVICE FOR IMPROVING PERFORMANCE OF UPLINK CONTROL CHANNEL IN NON-TERRESTRIAL NETWORK**

(57)    As a technology for improving the performance of an uplink control channel in a non-terrestrial network, provided may be a method of a satellite, the method comprising the steps of: transmitting, to a user equipment (UE), system information including information on a polarization type supportable by the satellite; receiving, from the UE, a polarization capability report including information on a polarization type supportable by the UE; indicating, to the UE, a polarization type usable by the UE on the basis of the received polarization capability report; and receiving a physical uplink control channel (PUCCH) transmitted from the UE by using polarization of the indicated polarization type.

【FIG. 9】

## Description

[Technical Field]

The present disclosure relates to a technique for improving performance of an uplink control channel in a non-terrestrial network, and more particularly, to a technique for improving performance of an uplink control channel in a non-terrestrial network by using polarization.

[Background Art]

A communication network (e.g. 5G communication network, 6G communication network, etc.) to provide enhanced communication services compared to the existing communication network (e.g. long term evolution (LTE), LTE-Advanced (LTA-A), etc.) is being developed. The 5G communication network (e.g. new radio (NR) communication network) can support not only a frequency band of 6 GHz or below, but also a frequency band of 6 GHz or above. That is, the 5G communication network can support a frequency range (FR1) band and/or FR2 band. The 5G communication network can support various communication services and scenarios compared to the LTE communication network. For example, usage scenarios of the 5G communication network may include enhanced Mobile BroadBand (eMBB), Ultra Reliable Low Latency Communication (URLLC), Massive Machine Type Communication (mMTC), and the like.

The 6G communication network can support a variety of communication services and scenarios compared to the 5G communication network. The 6G communication networks can meet the requirements of hyper-performance, hyper-bandwidth, hyper-space, hyper-precision, hyper-intelligence, and/or hyper-reliability. The 6G communication networks can support various and wide frequency bands and can be applied to various usage scenarios (e.g. terrestrial communication, non-terrestrial communication, sidelink communication, and the like).

The communication network (e.g. 5G communication network, 6G communication network, etc.) may provide communication services to terminals located on the ground. Recently, the demand for communication services for not only terrestrial but also non-terrestrial airplanes, drones, and satellites has been increasing, and for this purpose, technologies for a non-terrestrial network (NTN) have been discussed. The non-terrestrial network may be implemented based on 5G communication technology, 6G communication technology, and/or the like. For example, in the non-terrestrial network, communication between a satellite and a terrestrial communication node or a non-terrestrial communication node (e.g. airplane, drone, or the like) may be performed based on 5G communication technology, 6G communication technology, and/or the like. In the NTN, the satellite may perform functions of a base station in a communication network (e.g. 5G communication network, 6G communication network, and/or the like).

In a non-terrestrial network environment, a likelihood of polarization being maintained may be relatively high. Accordingly, discussions on multiplexing schemes utilizing polarization are in progress in the standardization. For example, in addition to improving the multiplexing performance of a data channel using polarization, a scheme for improving the performance of a control channel may be required. In particular, schemes related to signaling for applying polarization to a physical uplink control channel (PUCCH) resource, configuration of a terminal group to which polarization multiplexing is applied, polarization indication schemes, and polarization multiplexing processing of a data region and a demodulation reference signal (DMRS) region may be required.

[Disclosure]

[Technical Problem]

The present disclosure is directed to providing a method and an apparatus for uplink control channel performance in a non-terrestrial network, which can improve uplink control channel performance using polarizations.

[Technical Solution]

A method for improving uplink channel performance in a non-terrestrial network, performed by a satellite, according to a first exemplary embodiment of the present disclosure for achieving the above-described objective, may comprise: transmitting, to a user equipment (UE), system information including information on polarization types supported by the satellite; receiving, from the UE, a polarization capability report including information on polarization types supported by the UE; indicating, to the UE, a polarization type to be used by the UE based on the received polarization capability report; and receiving a physical uplink control channel (PUCCH) transmitted from the UE using a polarization according to the indicated polarization type.

The indicating of the polarization type to be used by the UE to the UE based on the received polarization capability report may comprise: determining a polarization multiplexing group in which the UE is to be included based on the received polarization capability report; identifying a polarization type to be used in the determined polarization multiplexing group; determining the polarization type to be used by the UE based on the polarization type to be used in the determined polarization multiplexing group; and indicating the determined polarization type to the UE.

When the polarization multiplexing group is a group using linear polarization, the polarization type to be used by the UE may be a horizontal linear polarization or a vertical linear polarization, and when the polarization multiplexing group is a group using circular polarization, the polarization type to be used by the UE may be a right-hand circular polarization or a left-hand circular polarization.

The determined polarization type may be indicated by signaling configuring a format of the PUCCH, and the signaling may include a 1 bit indicating the determined polarization type.

The determined polarization type may be indicated by signaling configuring a format of the PUCCH, and the signaling may include a 1 bit indicating the polarization type to be used in the polarization multiplexing group and a 1 bit indicating the polarization type to be used by the UE.

The determined polarization type may be indicated by a number of available resource blocks (RBs), which is a parameter set by a higher layer to designate physical resources used for the PUCCH.

The determined polarization type may be indicated by a least significant bit (LSB) value of a radio network temporary identifier (RNTI).

The determined polarization type may include a polarization type used in a data region and a polarization type used in a reference signal (RS) region.

A method for improving uplink channel performance in a non-terrestrial network, performed by a user equipment (UE), according to a second exemplary embodiment of the present disclosure for achieving the above-described objective, may comprise: receiving, from a satellite, system information including information on polarization types supported by the satellite; transmitting, to the satellite, a polarization capability report including information on polarization types supported by the UE; receiving, from the satellite, indication information indicating a polarization type to be used by the UE; and transmitting a physical uplink control channel (PUCCH) to the satellite using a polarization according to the polarization type indicated by the indication information.

The indication information may be included in signaling configuring a format of the PUCCH.

The indication information may correspond to a number of available resource blocks (RBs), which is a parameter set by a higher layer to designate physical resources used for the PUCCH.

The indication information may be a least significant bit (LSB) value of a radio network temporary identifier (RNTI).

The indication information may include information indicating a polarization type used in a data region and information indicating a polarization type used in a reference signal (RS) region, and the data region of the PUCCH may be transmitted using a polarization according to the polarization type used in the data region, and the RS region of the PUCCH may be transmitted using a polarization according to the polarization type used in the RS region.

An apparatus for improving uplink channel performance in a non-terrestrial network, implemented as a user equipment (UE), according to a third exemplary embodiment of the present disclosure for achieving the above-described objective, may comprise: at least one processor, wherein the at least one processor may cause the UE to perform: receiving, from a satellite, system information including information on polarization types supported by the satellite; transmitting, to the satellite, a polarization capability report including information on polarization types supported by the UE; receiving, from the satellite, indication information indicating a polarization type to be used by the UE; and transmitting a physical uplink control channel (PUCCH) to the satellite using a polarization according to the polarization type indicated by the indication information.

The indication information may be included in signaling configuring a format of the PUCCH.

The indication information may correspond to a number of available resource blocks (RBs), which is a parameter set by a higher layer to designate physical resources used for the PUCCH.

The indication information may be a least significant bit (LSB) value of a radio network temporary identifier (RNTI).

The indication information may include information indicating a polarization type used in a data region and information indicating a polarization type used in a reference signal (RS) region, and in the transmitting of the PUCCH to the satellite, the at least one processor may further cause the UE to perform: transmitting the data region of the PUCCH using a polarization according to the polarization type used in the data region, and transmitting the RS region of the PUCCH using a polarization according to the polarization type used in the RS region.

[Advantageous Effects]

According to the present disclosure, a terminal can multiplex uplink control information bits using various constant amplitude zero auto correlation (CAZAC) sequences, various orthogonal cover codes (OCCs), and various polarizations. According to the present disclosure, even when the uplink control information bits have the same cyclic shift and orthogonal cover code, the terminal may enable additional differentiation through polarization.

[Description of Drawings]

FIG. 1A is a conceptual diagram illustrating a first exemplary embodiment of a non-terrestrial network.
FIG. 1B is a conceptual diagram illustrating a second exemplary embodiment of a non-terrestrial network.
FIG. 2A is a conceptual diagram illustrating a third exemplary embodiment of a non-terrestrial network.
FIG. 2B is a conceptual diagram illustrating a fourth exemplary embodiment of a non-terrestrial network.
FIG. 2C is a conceptual diagram illustrating a fifth exemplary embodiment of a non-terrestrial network.
FIG. 3 is a block diagram illustrating a first exemplary embodiment of a communication node constituting a non-terrestrial network.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6A is a conceptual diagram illustrating a first exemplary embodiment of a protocol stack of a user plane in a transparent payload-based non-terrestrial network.
FIG. 6B is a conceptual diagram illustrating a first exemplary embodiment of a protocol stack of a control plane in a transparent payload-based non-terrestrial network.
FIG. 7A is a conceptual diagram illustrating a first exemplary embodiment of a protocol stack of a user plane in a regenerative payload-based non-terrestrial network.
FIG. 7B is a conceptual diagram illustrating a first exemplary embodiment of a protocol stack of a control plane in a regenerative payload-based non-terrestrial network.
FIGS. 8A and 8B are conceptual diagrams illustrating configurations of DMRS and UCI in PUCCH format 1.
FIG. 9 is a sequence chart illustrating a first exemplary embodiment of a method for improving uplink control channel performance in a non-terrestrial network.
FIG. 10 is a conceptual diagram illustrating a first exemplary embodiment of a process in which a terminal generates an acknowledgement or negative acknowledgement signal.

[Best mode of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the present disclosure. As used herein, the singular forms are intended to include the plural forms as well, unless the context clearly indicates otherwise. It will be further understood that the terms "comprise" and/or "include" when used herein, specify the presence of stated features, integers, steps, operations, elements, components or combinations thereof, but do not preclude the presence or addition of one or more other features, integers, steps, operations, elements, components, and/or combinations thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted. In addition to the exemplary embodiments explicitly described in the present disclosure, operations may be performed according to a combination of the exemplary embodiments, extensions of the exemplary embodiments, and/or modifications of the exemplary embodiments. Performance of some operations may be omitted, and the order of performance of operations may be changed.

Even when a method (e.g. transmission or reception of a signal) performed at a first communication node among communication nodes is described, a corresponding second communication node may perform a method (e.g. reception or transmission of the signal) corresponding to the method performed at the first communication node. That is, when an operation of a user equipment (UE) is described, a base station corresponding to the UE may perform an operation corresponding to the operation of the UE. Conversely, when an operation of a base station is described, a UE corresponding to the base station may perform an operation corresponding to the operation of the base station. In a non-terrestrial network (NTN) (e.g. payload-based NTN), operations of a base station may refer to operations of a satellite, and operations of a satellite may refer to operations of a base station.

The base station may refer to a NodeB, evolved NodeB (eNodeB), next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and/or the like. The UE may refer to a terminal, device, apparatus, node, communication node, end node, access terminal, mobile terminal, station, subscriber station, mobile station, portable subscriber station, on-broad unit (OBU), and/or the like.

In the present disclosure, signaling may be at least one of higher layer signaling, medium access control (MAC) signaling, or physical (PHY) signaling. Messages used for higher layer signaling may be referred to as 'higher layer messages' or 'higher layer signaling messages'. Messages used for MAC signaling may be referred to as 'MAC messages' or 'MAC signaling messages'. Messages used for PHY signaling may be referred to as 'PHY messages' or 'PHY signaling messages'. The higher layer signaling may refer to a transmission and reception operation of system information (e.g. master information block (MIB), system information block (SIB)) and/or RRC messages. The MAC signaling may refer to a transmission and reception operation of a MAC control element (CE). The PHY signaling may refer to a transmission and reception operation of control information (e.g. downlink control information (DCI), uplink control information (UCI), and sidelink control information (SCI)).

In the present disclosure, "an operation (e.g. transmission operation) is configured" may mean that "configuration information (e.g. information element(s) or parameter(s)) for the operation and/or information indicating to perform the operation is signaled". "Information element(s) (e.g. parameter(s)) are configured" may mean that "corresponding information element(s) are signaled". In the present disclosure, "signal and/or channel" may mean a signal, a channel, or "signal and channel," and "signal" may be used to mean "signal and/or channel".

A communication system may include at least one of a terrestrial network, non-terrestrial network, 4G communication network (e.g. long-term evolution (LTE) communication network), 5G communication network (e.g. new radio (NR) communication network), or 6G communication network. Each of the 4G communications network, 5G communications network, and 6G communications network may include a terrestrial network and/or a non-terrestrial network. The non-terrestrial network may operate based on at least one communication technology among the LTE communication technology, 5G communication technology, or 6G communication technology. The non-terrestrial network may provide communication services in various frequency bands.

The communication network to which exemplary embodiments are applied is not limited to the content described below, and the exemplary embodiments may be applied to various communication networks (e.g. 4G communication network, 5G communication network, and/or 6G communication network). Here, a communication network may be used in the same sense as a communication system.

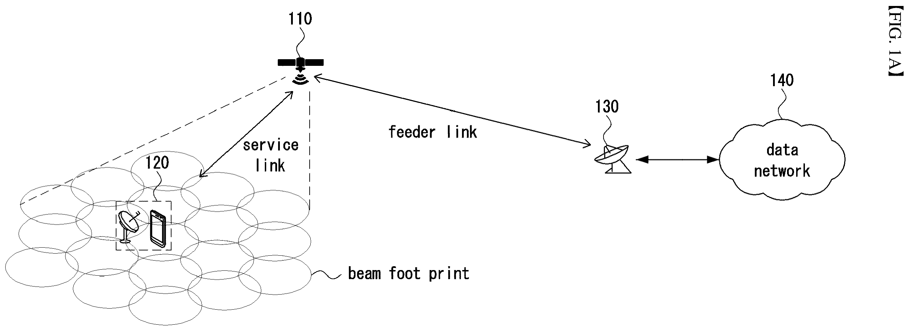

FIG. 1A is a conceptual diagram illustrating a first exemplary embodiment of a non-terrestrial network.

As shown in FIG. 1A, a non-terrestrial network (NTN) may include a satellite 110, a communication node 120, a gateway 130, a data network 140, and the like. A unit including the satellite 110 and the gateway 130 may correspond to a remote radio unit (RRU). The NTN shown in FIG. 1A may be an NTN based on a transparent payload. The satellite 110 may be a low earth orbit (LEO) satellite, a medium earth orbit (MEO) satellite, a geostationary earth orbit (GEO) satellite, a high elliptical orbit (HEO) satellite, or an unmanned aircraft system (UAS) platform. The UAS platform may include a high altitude platform station (HAPS). A non-GEO satellite may be an LEO satellite and/or MEO satellite.

The communication node 120 may include a communication node (e.g. a user equipment (UE) or a terminal) located on a terrestrial site and a communication node (e.g. an airplane, a drone) located on a non-terrestrial space. A service link may be established between the satellite 110 and the communication node 120, and the service link may be a radio link. The satellite 110 may be referred to as an NTN payload. The gateway 130 may support a plurality of NTN payloads. The satellite 110 may provide communication services to the communication node 120 using one or more beams. The shape of a footprint of the beam of the satellite 110 may be elliptical or circular.

In the non-terrestrial network, three types of service links can be supported as follows.

- Earth-fixed: a service link may be provided by beam(s) that continuously cover the same geographic area at all times (e.g. geosynchronous orbit (GSO) satellite).
- quasi-earth-fixed: a service link may be provided by beam(s) covering one geographical area during a limited period and provided by beam(s) covering another geographical area during another period (e.g. non-GSO (NGSO) satellite forming steerable beams).
- earth-moving: a service link may be provided by beam(s) moving over the Earth's surface (e.g. NGSO satellite forming fixed beams or non-steerable beams).

The communication node 120 may perform communications (e.g. downlink communication and uplink communication) with the satellite 110 using 4G communication technology, 5G communication technology, and/or 6G communication technology. The communications between the satellite 110 and the communication node 120 may be performed using an NR-Uu interface and/or 6G-Uu interface. When dual connectivity (DC) is supported, the communication node 120 may be connected to other base stations (e.g. base stations supporting 4G, 5G, and/or 6G functionality) as well as the satellite 110, and perform DC operations based on the techniques defined in 4G, 5G, and/or 6G technical specifications.

The gateway 130 may be located on a terrestrial site, and a feeder link may be established between the satellite 110 and the gateway 130. The feeder link may be a radio link. The gateway 130 may be referred to as a 'non-terrestrial network (NTN) gateway'. The communications between the satellite 110 and the gateway 130 may be performed based on an NR-Uu interface, a 6G-Uu interface, or a satellite radio interface (SRI). The gateway 130 may be connected to the data network 140. There may be a 'core network' between the gateway 130 and the data network 140. For example, the gateway 130 may be connected to the core network, and the core network may be connected to the data network 140. The core network may support the 4G communication technology, 5G communication technology, and/or 6G communication technology. For example, the core network may include an access and mobility management function (AMF), a user plane function (UPF), a session management function (SMF), and the like. The communications between the gateway 130 and the core network may be performed based on an NG-C/U interface or 6G-C/U interface.

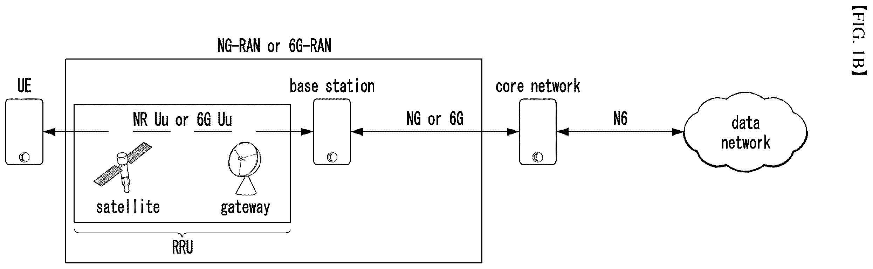

As shown in an exemplary embodiment of FIG. 1B, there may be a 'core network' between the gateway 130 and the data network 140 in a transparent payload-based NTN.

FIG. 1B is a conceptual diagram illustrating a second exemplary embodiment of a non-terrestrial network.

As shown in FIG. 1B, the gateway may be connected with the base station, the base station may be connected with the core network, and the core network may be connected with the data network. Each of the base station and core network may support the 4G communication technology, 5G communication technology, and/or 6G communication technology. The communications between the gateway and the base station may be performed based on an NR-Uu interface or 6G-Uu interface, and the communications between the base station and the core network (e.g. AMF, UPF, SMF, and the like) may be performed based on an NG-C/U interface or 6G-C/U interface.

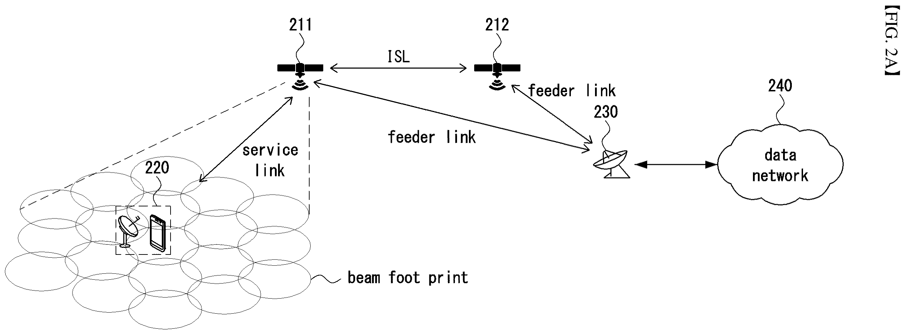

FIG. 2A is a conceptual diagram illustrating a third exemplary embodiment of a non-terrestrial network.

As shown in FIG. 2A, a non-terrestrial network may include a first satellite 211, a second satellite 212, a communication node 220, a gateway 230, a data network 240, and the like. The NTN shown in FIG. 2A may be a regenerative payload based NTN. For example, each of the satellites 211 and 212 may perform a regenerative operation (e.g. demodulation, decoding, re-encoding, re-modulation, and/or filtering operation) on a payload received from other entities (e.g. the communication node 220 or the gateway 230), and transmit the regenerated payload.

Each of the satellites 211 and 212 may be a LEO satellite, a MEO satellite, a GEO satellite, a HEO satellite, or a UAS platform. The UAS platform may include a HAPS. The satellite 211 may be connected to the satellite 212, and an inter-satellite link (ISL) may be established between the satellite 211 and the satellite 212. The ISL may operate in an RF frequency band or an optical band. The ISL may be established optionally. The communication node 220 may include a terrestrial communication node (e.g. UE or terminal) and a non-terrestrial communication node (e.g. airplane or drone). A service link (e.g. radio link) may be established between the satellite 211 and communication node 220. The satellite 211 may provide communication services to the communication node 220 using one or more beams.

The communication node 220 may perform communications (e.g. downlink communication or uplink communication) with the satellite 211 using the 4G communication technology, 5G communication technology, and/or 6G communication technology. The communications between the satellite 211 and the communication node 220 may be performed using an NR-Uu interface or 6G-Uu interface. When DC is supported, the communication node 220 may be connected to other base stations (e.g. base stations supporting 4G, 5G, and/or 6G functionality) as well as the satellite 211, and may perform DC operations based on the techniques defined in 4G, 5G, and/or 6G technical specifications.

The gateway 230 may be located on a terrestrial site, a feeder link may be established between the satellite 211 and the gateway 230, and a feeder link may be established between the satellite 212 and the gateway 230. The feeder link may be a radio link. When the ISL is not established between the satellite 211 and the satellite 212, the feeder link between the satellite 211 and the gateway 230 may be established mandatorily. The communications between each of the satellites 211 and 212 and the gateway 230 may be performed based on an NR-Uu interface, a 6G-Uu interface, or an SRI. The gateway 230 may be connected to the data network 240.

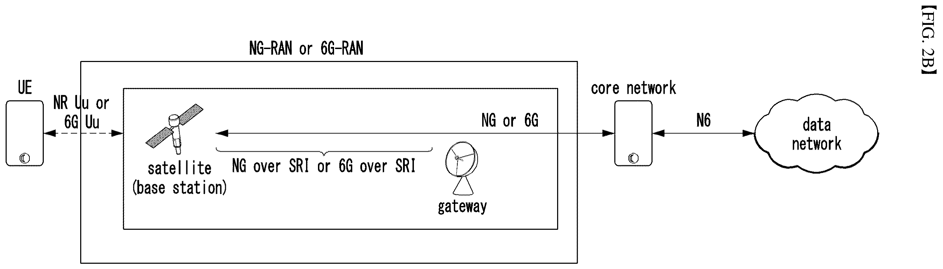

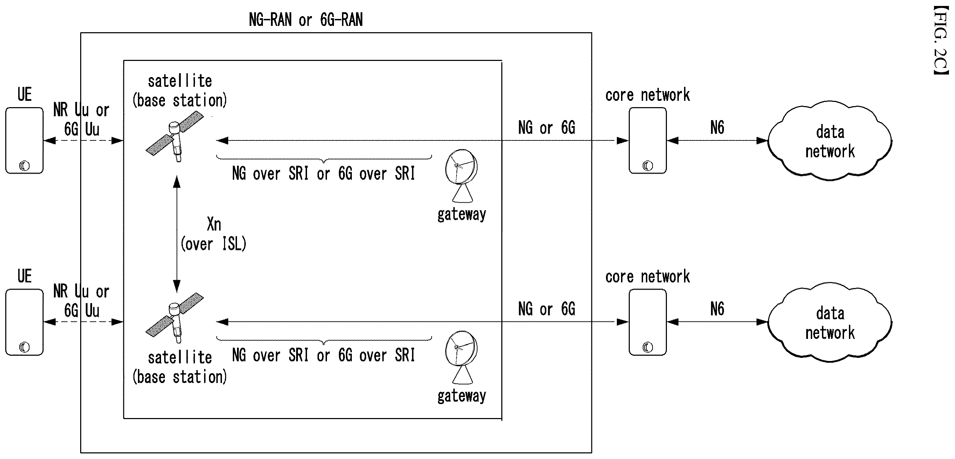

As shown in exemplary embodiments of FIG. 2B and FIG. 2C, there may be a 'core network' between the gateway 230 and the data network 240.

FIG. 2B is a conceptual diagram illustrating a fourth exemplary embodiment of a non-terrestrial network, and FIG. 2C is a conceptual diagram illustrating a fifth exemplary embodiment of a non-terrestrial network.

As shown in FIG. 2B and FIG. 2C, the gateway may be connected with the core network, and the core network may be connected with the data network. The core network may support the 4G communication technology, 5G communication technology, and/or 6G communication technology. For example. The core network may include AMF, UPF, SMF, and the like. Communication between the gateway and the core network may be performed based on an NG-C/U interface or 6G-C/U interface. Functions of a base station may be performed by the satellite. That is, the base station may be located on the satellite. The base station located on the satellite may be a base station-distributed unit (DU), and a base station-centralized unit (CU) may be located within an NG-RAN or a 6G-RAN. A payload may be processed by the base station located on the satellite. Base stations located on different satellites may be connected to the same core network. One satellite may have one or more base stations. In the non-terrestrial network of FIG. 2B, an ISL between satellites may not be established, and in the non-terrestrial network of FIG. 2C, an ISL between satellites may be established.

Meanwhile, the entities (e.g. satellite, base station, UE, communication node, gateway, and the like) constituting the non-terrestrial network shown in FIGS. 1A, 1B, 2A, 2B, and/or 2C may be configured as follows. In the present disclosure, the entity may be referred to as a communication node.

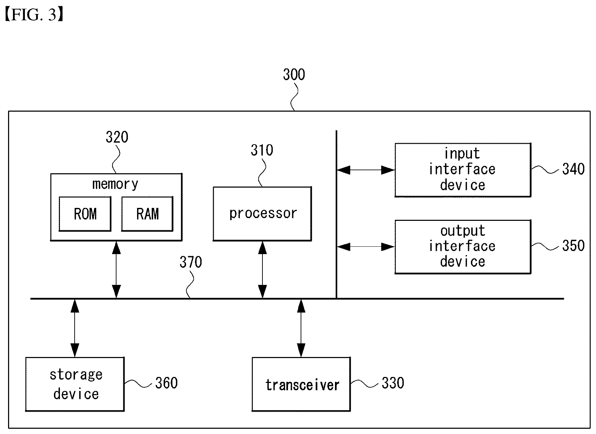

FIG. 3 is a block diagram illustrating a first exemplary embodiment of a communication node constituting a non-terrestrial network.

As shown in FIG. 3, a communication node 300 may include at least one processor 310, a memory 320, and a transceiver 330 connected to a network to perform communication. In addition, the communication node 300 may further include an input interface device 340, an output interface device 350, a storage device 360, and the like. The components included in the communication node 300 may be connected by a bus 370 to communicate with each other.

However, each component included in the communication node 300 may be connected to the processor 310 through a separate interface or a separate bus instead of the common bus 370. For example, the processor 310 may be connected to at least one of the memory 320, the transceiver 330, the input interface device 340, the output interface device 350, and the storage device 360 through a dedicated interface.

The processor 310 may execute at least one instruction stored in at least one of the memory 320 and the storage device 360. The processor 310 may refer to a central processing unit (CPU), a graphics processing unit (GPU), or a dedicated processor on which the methods according to the exemplary embodiments of the present disclosure are performed. Each of the memory 320 and the storage device 360 may be configured as at least one of a volatile storage medium and a nonvolatile storage medium. For example, the memory 320 may be configured with at least one of a read only memory (ROM) and a random access memory (RAM).

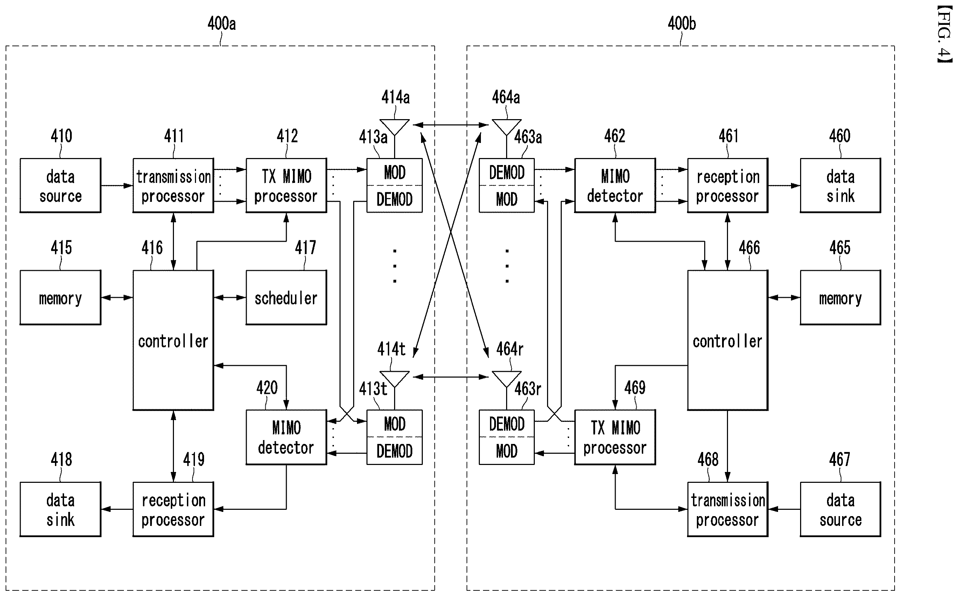

Meanwhile, communication nodes that perform communications in the communication network (e.g. non-terrestrial network) may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

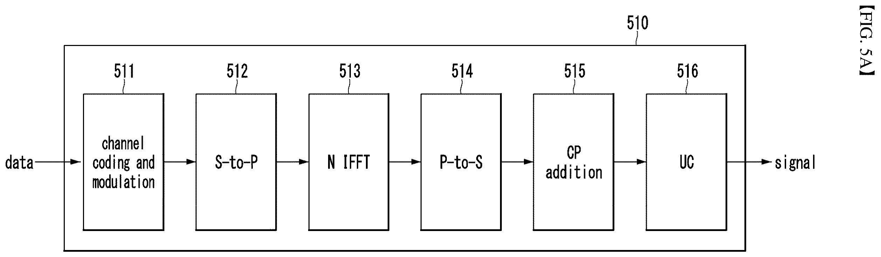

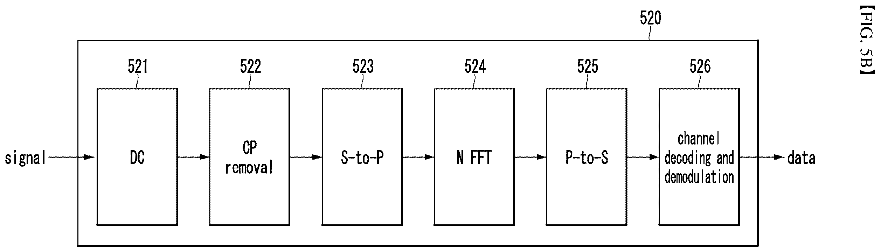

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, NTN reference scenarios may be defined as shown in Table 1 below.

[Table 1]

|  | NTN shown in FIG. 1 | NTN shown in FIG. 2 |
|---|---|---|
| GEO | Scenario A | Scenario B |
| LEO (steerable beams) | Scenario C1 | Scenario D1 |
| LEO (beams moving with satellite) | Scenario C2 | Scenario D2 |

When the satellite 110 in the NTN shown in FIG. 1A and/or FIG. 1B is a GEO satellite (e.g. a GEO satellite that supports a transparent function), this may be referred to as 'scenario A'. When the satellites 211 and 212 in the NTN shown in FIG. 2A, FIG. 2B, and/or FIG. 2C are GEO satellites (e.g. GEOs that support a regenerative function), this may be referred to as 'scenario B'. When the satellite 110 in the NTN shown in FIG. 1A and/or FIG. 1B is an LEO satellite with steerable beams, this may be referred to as 'scenario C1'. When the satellite 110 in the NTN shown in FIG. 1A and/or FIG. 1B is an LEO satellite having beams moving with the satellite, this may be referred to as 'scenario C2'. When the satellites 211 and 212 in the NTN shown in FIG. 2A, FIG. 2B, and/or FIG. 2C are LEO satellites with steerable beams, this may be referred to as 'scenario D1'. When the satellites 211 and 212 in the NTN shown in FIG. 2A, FIG. 2B, and/or FIG. 2C are LEO satellites having beams moving with the satellites, this may be referred to as 'scenario D2'.

Parameters for the NTN reference scenarios defined in Table 1 may be defined as shown in Table 2 below.

[Table 2]

|  | Scenarios A and B | Scenarios C and D |
|---|---|---|
| Altitude | 35,786 km | 600 km<br>1,200 km |
| Spectrum (service link) | < 6 GHz (e.g. 2 GHz)<br>> 6 GHz (e.g. DL 20 GHz, UL 30 GHz) | |
| Maximum channel bandwidth capability (service link) | 30 MHz for band <6 GHz<br>1 GHz for band >6 GHz | |
| Maximum distance between satellite and communication node (e.g. UE) at the minimum elevation angle | 40,581 km | 1,932 km (altitude of 600 km)<br>3,131 km (altitude of 1,200 km) |

(continued)

| | Scenarios A and B | Scenarios C and D |
|---|---|---|
| Maximum round trip delay (RTD) (only propagation delay) | Scenario A: 541.46 ms (service and feeder links) Scenario B: 270.73 ms (only service link) | Scenario C: (transparent payload: service and feeder links) -5.77 ms (altitude of 600km) -41.77 ms (altitude of 1,200 km) Scenario D: (regenerative payload: only service link) -12.89 ms (altitude of 600 km) -20.89 ms (altitude of 1,200 km) |
| Maximum differential delay within a cell | 10.3 ms | 3.12 ms (altitude of 600 km) 3.18 ms (altitude of 1,200 km) |
| Service link | NR defined in 3GPP | |
| Feeder link | Radio interfaces defined in | 3GPP or non-3GPP |

In addition, in the scenarios defined in Table 1, delay constraints may be defined as shown in Table 3 below.

[Table 3]

| | Scenario A | Scenario B | Scenario C1-2 | Scenario D1-2 |
|---|---|---|---|---|
| Satellite altitude | 35,786 km | | 600 km | |
| Maximum RTD in a radio interface between base station and UE | 541.75 ms (worst case) | 270.57 ms | 28.41 ms | 12.88 ms |
| Minimum RTD in a radio interface between base station and UE | 477.14 ms | 238.57 ms | 8 ms | 4 ms |

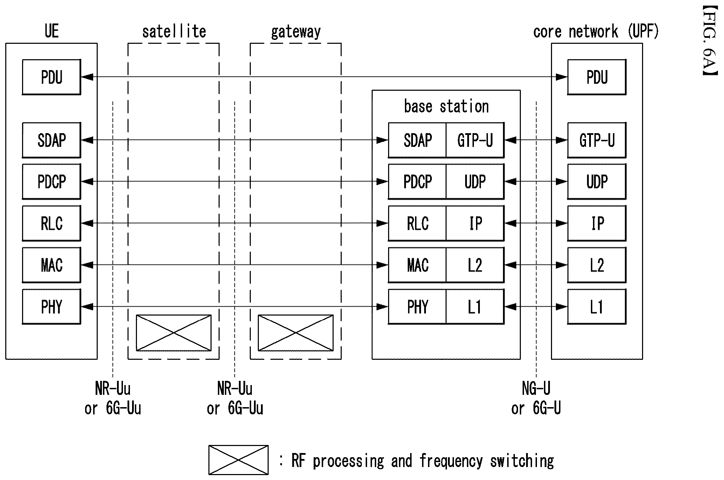

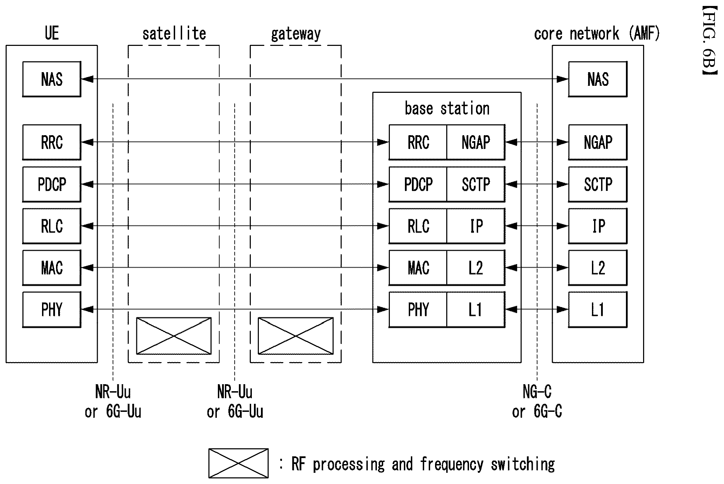

FIG. 6A is a conceptual diagram illustrating a first exemplary embodiment of a protocol stack of a user plane in a transparent payload-based non-terrestrial network, and FIG. 6B is a conceptual diagram illustrating a first exemplary embodiment of a protocol stack of a control plane in a transparent payload-based non-terrestrial network. As shown in FIGS. 6A and 6B, user data may be transmitted and received between a UE and a core network (e.g. UPF), and control data (e.g. control information) may be transmitted and received between the UE and the core network (e.g. AMF). Each of the user data the and control data may be transmitted and received through a satellite and/or gateway. The protocol stack of the user plane shown in FIG. 6A may be applied identically or similarly to a 6G communication network. The protocol stack of the control plane shown in FIG. 6B may be applied identically or similarly to a 6G communication network.

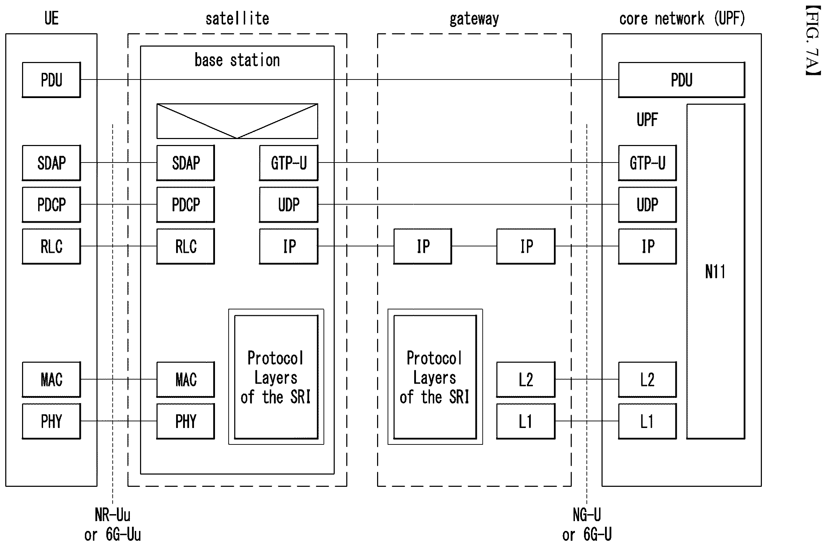

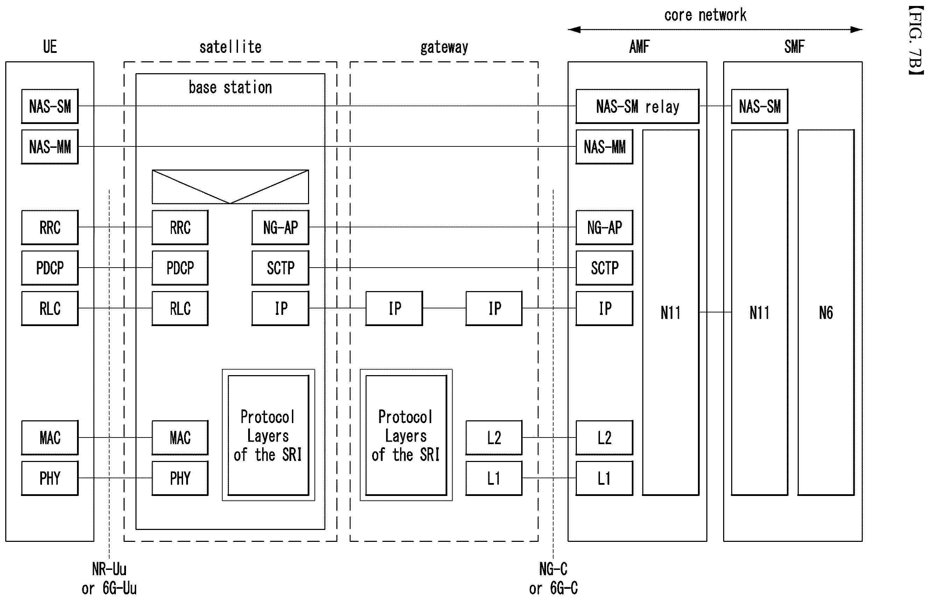

FIG. 7A is a conceptual diagram illustrating a first exemplary embodiment of a protocol stack of a user plane in a regenerative payload-based non-terrestrial network, and FIG. 7B is a conceptual diagram illustrating a first exemplary embodiment of a protocol stack of a control plane in a regenerative payload-based non-terrestrial network.

As shown in FIGS. 7A and 7B, each of user data and control data (e.g. control information) may be transmitted and received through an interface between a UE and a satellite (e.g. base station). The user data may refer to a user protocol data unit (PDU). A protocol stack of a satellite radio interface (SRI) may be used to transmit and receive the user data and/or control data between the satellite and a gateway. The user data may be transmitted and received through a general packet radio service (GPRS) tunneling protocol (GTP)-U tunnel between the satellite and a core network.

Meanwhile, in a non-terrestrial network, a base station may transmit system information (e.g. SIB19) including satellite assistance information for NTN access. A UE may receive the system information (e.g. SIB19) from the base station, identify the satellite assistance information included in the system information, and perform communication (e.g. non-terrestrial communication) based on the satellite assistance information. The SIB19 may include information element(s) defined in Table 4 below.

[Table 4]

```
SIB19-r17 ::= SEQUENCE {
      ntn-Config-r17                          NTN-Config-r17
      t-Service-r17                           INTEGER(0..549755813887)
      referenceLocation-r17                   ReferenceLocation-r17
      distanceThresh-r17                      INTEGER(0..65525)
      ntn-NeighCellConfigList-r17             NTN-NeighCellConfigList-r17
      lateNonCriticalExtension                OCTET STRING

      ...,

      [[

      ntn-NeighCellConfigListExt-v1720    NTN-NeighCellConfigList-r17

      ]]

}
NTN-NeighCellConfigList-r17 ::=             SEQUENCE (SIZE(1..maxCellNTN-r17))
OF NTN-NeighCellConfig-r17
         NTN-NeighCellConfig-r17 ::=             SEQUENCE {
         ntn-Config-r17                          NTN-Config-r17
```

```
      carrierFreq-r17                         ARFCN-ValueNR
      physCellId-r17                          PhysCellId

}
```

*NTN-Config* defined in Table 4 may include information element(s) defined in Table 5 below.

[Table 5]

```
NTN-Config-r17 ::=                  SEQUENCE {
    epochTime-r17                       EpochTime-r17
    ntn-UlSyncValidityDuration-r17 ENUMERATED{ s5, s10, s15, s20, s25, s30, s35,
s40, s45, s50, s55, s60, s120, s180, s240, s900}
    cellSpecificKoffset-r17             INTEGER(1..1023)
    kmac-r17                            INTEGER(1..512)
    ta-Info-r17                         TA-Info-r17
    ntn-PolarizationDL-r17              ENUMERATED {rhcp,lhcp,linear}
    ntn-PolarizationUL-r17              ENUMERATED {rhcp,lhcp,linear}
    ephemerisInfo-r17                   EphemerisInfo-r17
    ta-Report-r17                       ENUMERATED {enabled}

    ...

}
EpochTime-r17 ::=                   SEQUENCE {
    sfn-r17                             INTEGER(0..1023),
    subFrameNR-r17                      INTEGER(0..9)
}
TA-Info-r17 ::=                     SEQUENCE   {
    ta-Common-r17                       INTEGER(0..66485757),
    ta-CommonDrift-r17                  INTEGER(-257303..257303)
    ta-CommonDriftVariant-r17           INTEGER(0..28949)
}
```

*EphemerisInfo* defined in Table 5 may include information element(s) defined in Table 6 below.

[Table 6]

```
EphemerisInfo-r17 ::=              CHOICE {

        positionVelocity-r17              PositionVelocity-r17,

        orbital-r17                       Orbital-r17

}

PositionVelocity-r17 ::=          SEQUENCE {

        positionX-r17                     PositionStateVector-r17,

        positionY-r17                     PositionStateVector-r17,

        positionZ-r17                     PositionStateVector-r17,

        velocityVX-r17                    VelocityStateVector-r17,

        velocityVY-r17                    VelocityStateVector-r17,

        velocityVZ-r17                    VelocityStateVector-r17

}

Orbital-r17 ::=                   SEQUENCE {

        semiMajorAxis-r17                 INTEGER (0..8589934591),

        eccentricity-r17                  INTEGER (0..1048575),

        periapsis-r17                     INTEGER (0..268435455),

        longitude-r17                     INTEGER (0..268435455),

        inclination-r17                   INTEGER (-67108864..67108863),

        meanAnomaly-r17                   INTEGER (0..268435455)

}

PositionStateVector-r17 ::= INTEGER (-33554432..33554431)

VelocityStateVector-r17 ::= INTEGER (-131072..131071)
```

In a terrestrial network (TN), acknowledgement (ACK) and negative acknowledgement (NACK) may be transmitted through different resources composed of different cyclic shifts (CSs) of a constant amplitude zero auto correlation (CAZAC) sequence in the frequency domain and different orthogonal cover codes (OCCs) in the time domain. The number of terminals that can be multiplexed within the same physical resource block (PRB) may be determined by a product of the number of CSs and the number of OCCs. Accordingly, a physical uplink control channel (PUCCH) resource used for transmission of ACK and NACK may be distinguished by the CS, OCC, and PRB. If any one of these three is different, the corresponding resource may be regarded as a different PUCCH resource. A cell in an NTN environment may have a significantly larger size than a cell in a TN environment. As a result, the cell in the NTN environment may be capable of providing services to a larger number of terminals than the cell in the TN environment. Accordingly, an improvement in terminal multiplexing performance may be required to serve a larger number of terminals in the NTN environment. In addition, repeated transmission may be applied to mitigate a coverage problem caused by path loss due to a long transmission distance with a satellite. Therefore, PUCCH resource consumption may increase. In addition, when OCCs are applied, coverage performance degradation may occur due to a peak-to-average power ratio (PAPR) problem.

The likelihood of polarization being maintained may be relatively high in the NTN environment. Accordingly, discussions regarding a multiplexing scheme using polarizations may be in progress in the standardization. For example, in addition to enhancement of the data channel multiplexing performance using polarizations, a scheme for improving control channel performance may be needed. In particular, schemes related to signaling for applying polarization to a PUCCH resource, grouping of terminals to which polarization-based multiplexing is to be applied, polarization indication schemes, and polarization multiplexing processing of a data region and a demodulation reference signal (DMRS) region may be required.

Table 7 represents PUCCH formats.

[Table 7]

| Parameters | PUCCH format 0 | PUCCH format 1 | PUCCH format 2 | PUCCH format 3 | PUCCH format 4 |
|---|---|---|---|---|---|
| UCI bit length | ≤2 | ≤2 | >2 | >2 | >2 |
| PUCCH length | Short | Long | Short | Long | Long |
| UE multiplexing | Yes (CS) | Yes (CS and OCC) | No | No | Yes (pre-DFT OCC) |
| in the same PRB | | | | | |
| UCI/DMRS multiplexing scheme | N/A | TDM | FDM | TDM | TDM |
| Start PRB/PRB offset | PRB-Id | PRB-Id | PRB-Id | PRB-Id | PRB-Id |
| Number of PRBs, *nofPRBs* | 1 | 1 | 1~16 | 1~16 | 1 |
| Intra-slot frequency hopping | Enabled | Enabled | Enabled | Enabled | Enabled |

As shown above, PUCCH formats 0 and 1 may be used to deliver an uplink control information (UCI) payload of 1 or 2 bits, whereas other formats may be used to deliver a UCI payload of more than 2 bits. In addition, in PUCCH formats 1, 3, and 4, symbol(s) including a DMRS may be time-division multiplexed with UCI symbols to maintain a low PAPR, whereas in PUCCH format 2, the DMRS may be frequency-division multiplexed with subcarriers for data transmission. In addition, when multi-user multiplexing is applied to the same time and frequency resource, different cyclic shifts or OCCs may be used, and such multiplexing may be supported only for the PUCCH formats 0, 1, and 4. Meanwhile, a PUCCH resource may be configured as shown in Table 8.

[Table 8]

```
Pl
   PUCCH-Resource ::=                   SEQUENCE {
       pucch-ResourceId                     PUCCH-ResourceId,
       startingPRB                          PRB-Id,
       intraSlotFrequencyHopping            ENUMERATED { enabled } OPTIONAL,   -- Need R
       secondHopPRB                         PRB-Id    OPTIONAL,   -- Need R

       format          CHOICE {
           format0             PUCCH-format0,     - Cond InFirstSetOnly
           format1             PUCCH-format1,     - Cond InFirstSetOnly
           format2             PUCCH-format2,     - Cond NotInFirstSet
           format3             PUCCH-format3,     - Cond NotInFirstSet
           format4             PUCCH-format4      - Cond NotInFirstSet
   }    }
     }
```

In addition, a configuration message of PUCCH format 1 may be as shown in Table 9.

[Table 9]

```
PUCCH-format1 ::=                     SEQUENCE {
    initialCyclicShift                INTEGER(0..11),
    nrofSymbols                       INTEGER (4..14),
    startingSymbolIndex               INTEGER(0..10),
    timeDomainOCC                     INTEGER(0..6)
}
```

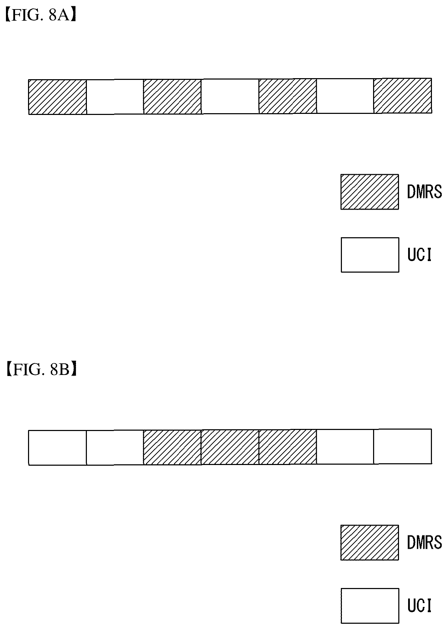

The base station may notify a UE of a PUCCH resource to be used for HARQ-ACK feedback for Msg4 through characteristics of a DCI and a PUCCH resource indicator (PRI) field of the DCI. In addition, the PUCCH format 1 may be for transmission of a long PUCCH, and may have a UE multiplexing capacity of up to 84 UEs without frequency hopping and 36 UEs with frequency hopping in the same PRB, with a small payload of up to 2 bits. Further, a DMRS symbol may be configured using a low PAPR computer-generated sequence (CGS) using a cyclic shift in the frequency domain, and an OCC in the time domain. In addition, UCI symbols may be modulated by BPSK (1 bit) or QPSK (2 bits), and may be multiplied by a low PAPR computer-generated sequence. OCCs may also be applied in the time domain. FIGS. 8A and 8B are conceptual diagrams illustrating configurations of DMRS and UCI in PUCCH format 1.

As shown in FIG. 8A, in PUCCH format 1, a DMRS and a UCI may be alternately located due to an extended method. In contrast, as shown in FIG. 8B, in PUCCH format 2, a DMRS and a UCI may be separated due to a puncturing method.

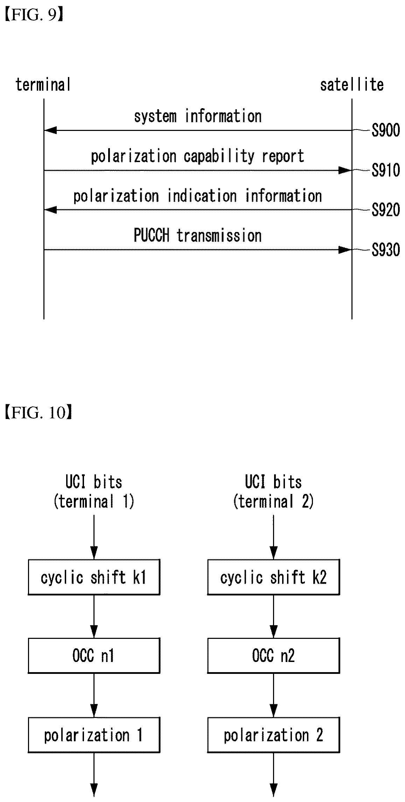

FIG. 9 is a sequence chart illustrating a first exemplary embodiment of a method for improving uplink control channel performance in a non-terrestrial network.

As shown in FIG. 9, in a method for improving uplink control channel performance, a satellite may transmit system information including information on supportable polarizations to terminals (S900). For example, the satellite may transmit a system information block (SIB), which is system information, to the terminals. Specifically, the satellite may deliver the information to the terminals through a non-terrestrial polarization downlink field (e.g. *ntn-PolarizationDL-r17*) within the SIB. Accordingly, the terminals may receive the system information including information on the polarizations supportable by the satellite through the SIB from the satellite.

The terminals may report information on polarizations (i.e. polarization capability) available at each terminal based on the information on supportable polarizations received from the satellite (S910). For example, the terminals may perform the reporting after establishment of radio resource control (RRC) connection. The satellite and the terminals may newly define a UE-NTN-capability message as a message container. The terminals may report information on polarization capability to the satellite using the newly defined UE-NTN-capability message. Alternatively, the terminals may report the information on polarization capability to the satellite through a message including capabilities and/or RRC signaling.

For example, the terminal may support linear polarization (LP). In such a case, the terminal may support vertical linear polarization (VLP) or horizontal linear polarization (HLP) for purposes such as correcting polarization antenna misalignment or reducing power consumption. Accordingly, the terminal may report information indicating whether linear polarization is supported to the satellite. In addition, the terminal may report information indicating whether vertical linear polarization or horizontal linear polarization is supported to the satellite.

The terminal may support circular polarization (CP). In such a case, the terminal may support right-hand circular polarization (RHCP) or left-hand circular polarization (LHCP). Accordingly, the terminal may report information indicating whether circular polarization is supported to the satellite. In addition, the terminal may report information indicating whether right-hand circular polarization or left-hand circular polarization is supported to the satellite.

Accordingly, the satellite may receive information on supportable polarizations from the terminals. Then, the satellite may configure a polarization multiplexing group of terminals for which polarization multiplexing is available. For example, polarization multiplexing between terminals supporting LP and terminals supporting CP may not be possible. Therefore, the satellite may configure polarization multiplexing groups by grouping LP terminals together and CP terminals together. After completing configuration of polarization multiplexing groups as described above, the satellite may determine a polarization to be used by each terminal. Then, the satellite may transmit polarization indication information indicating the polarization to be used by each terminal (S920).

To this end, for example, the satellite may add a 1 bit indicating polarization to be used by the terminal to signaling for configuring a PUCCH format and transmit the signaling to the terminal, as shown in Table 10. Then, the terminal may receive, from the satellite, the signaling for configuring the PUCCH format including an indication of the polarization to be used.

# EP 4 648 518 A2

[Table 10]

| PUCCH-format1 ::= | SEQUENCE{ |
|---|---|
| initialCyclicShift | INTEGER(0… |
| nrofSymbols | INTEGER(4… |
| startingSymblolIndex | INTEGER(0… |
| timeDomainOCC | INTEGER(0… |
| Polarization | INTEGER(0,1) |
| } | |

In another example, the satellite may notify the terminal of the polarization to be used by the terminal by using a range of values of the number $N_{RB}^{(2)}$ of available resource blocks (RBs), which is a parameter given from a higher layer to designate physical resources used for PUCCH. For example, when the value of the parameter $N_{RB}^{(2)}$ is 1 through N, a polarization 1 may be used, and when the value of the parameter $N_{RB}^{(2)}$ is N+1 through K, a polarization 2 may be used. Here, N and K may be positive integers. In another example, the satellite may use a radio network temporary identifier (RNTI) to notify the terminal of the polarization to be used by the terminal. For example, the satellite may notify the terminal of the polarization to be used by using a least significant bit (LSB) value of the RNTI (or an arbitrary function value based on the RNTI). For example, the satellite may notify the terminal of the polarization to be used depending on whether the LSB is 0 or 1. To this end, the satellite may predefine and notify the terminal of the correspondence between 0 and 1 and the respective types of polarization. Here, the RNTI may be a system information RNTI (SI-RNTI), a random access RNTI (RA-RNTI), a temporary cell RNTI (TC-RNTI), a cell RNTI (C-RNTI), a modulation coding scheme cell RNTI (MCS-C-RNTI), or a configured scheduling RNTI (CS-RNTI).

The method described above may be a scheme in which the satellite performs grouping and indication according to whether LP or CP is supported, and transmits only 1 bit of polarization information when actual polarization multiplexing is applied. In contrast, for example, when the terminal receives a bit 0 as polarization group information, the terminal may recognize that LP is applied, and when the terminal receives 0 as additional polarization information, the terminal may recognize that VLP is applied, and when the terminal receives 1, the terminal may recognize that HLP is applied. On the other hand, when the terminal receives a bit 1 as polarization group information, the terminal may recognize that CP is applied, and when the terminal receives 0 as additional polarization information, the terminal may recognize that LHCP is applied, and when the terminal receives 1, the terminal may recognize that RHCP is applied. According to this, 1 bit of polarization group information indicating LP/CP and 1 bit of additional polarization information applied when polarization multiplexing is applied may be transmitted separately. Therefore, the polarization group information may be indicated only once at a time of group configuration, and only the additional polarization information of 1 bit may be transmitted when polarization multiplexing is applied, resulting in an advantage in terms of signaling.

As another method, the satellite may indicate both a 1 bit of polarization group information indicating LP/CP and a 1 bit of additional polarization information applied when polarization multiplexing is applied. In other words, a polarization field in signaling for configuring a PUCCH format may include 2 bits as shown in Table 11, in which a front bit indicates LP/CP as polarization group information and a rear bit indicates additional polarization information. For example, '00' may indicate VLP, '01' may indicate HLP, '10' may indicate LHCP, and '11' may indicate RHCP.

[Table 11]

```
PUCCH-format1 ::=              SEQUENCE{
      initialCyclicShift        INTEGER(0…11),
      nrofSymbols                 INTEGER(4…14),
      startingSymblolIndex        INTEGER(0…10),
      timeDomainOCC               INTEGER(0…6),
      Polarization                INTEGER(0,1,2,3)
}
```

The terminal may identify the polarization to be used. Then, the terminal may transmit a PUCCH to the satellite using the indicated polarization (S930). Then, the satellite may receive the PUCCH transmitted from the terminal using the indicated polarization. FIG. 10 is a conceptual diagram illustrating a first exemplary embodiment of a process in which a terminal generates an acknowledgement or negative acknowledgement signal.

As shown in FIG. 10, a first terminal may cyclically shift UCI bits using a CS k1 of a CAZAC sequence, orthogonalize the UCI bits in the time domain using an OCC n1, and generate a polarization signal using a first polarization to perform multiplexing. In addition, a second terminal may cyclically shift UCI bits using a CS k2 of the CAZAC sequence, orthogonalize the UCI bits in the time domain using an OCC n2, and generate a polarization signal using a second polarization to perform multiplexing. Through such a process, even when the UCI bits have the same CS and OCC, the UCI bits may be additionally distinguished through polarization, thereby enabling doubling of the terminal multiplexing capability.

In the case of OCCs using time-domain spreading, the number of spreading codes supported for ACK/NACK information may be limited by the number of RS symbols. In other words, as the number of symbols increases, the length of the spreading code increases, which may allow the use of a greater number of spreading codes.

Referring again to FIG. 8A, the number of RS symbols and the number of information transmission symbols may be the same. In contrast, referring to FIG. 8B, the number of RS symbols and the number of information transmission symbols may not be the same. Specifically, in the case of FIG. 8B, since the number of RS transmission symbols is smaller than the number of ACK/NACK information transmission symbols, the multiplexing capacity of the RS may be smaller than the multiplexing capacity of the ACK/NACK information.

Accordingly, as an example, the same polarization may be applied to a data region and a demodulation reference signal (DMRS) region in the application of CS/OCC/polarization to the data region and the DMRS region. In other words, the same polarization may be applied to both the data region and the DMRS region. For example, excluding polarization, the matching of the data region and the DMRS region may be one-to-one based on a combination of OCC indexes and CS values, as shown in Table 12.

[Table 12]

| Data region OCC index (n) | Data region polarization | DMRS region OCC index (n) | DMRS region CS value (k) | DMRS region polarization |
|---|---|---|---|---|
| 1 | polarization 1 | 1 | 0 | polarization 1 |
| 1 | polarization 2 | 1 | 0 | polarization 2 |
| 2 | polarization 1 | 1 | 6 | polarization 1 |
| 2 | polarization 2 | 1 | 6 | polarization 2 |

In another example of applying CS/OCC/polarization to the data region and the DMRS region, different polarizations may be applied to the data and the DMRS, respectively. In other words, this may apply in a case where the polarization applied to the data region and the polarization applied to the DMRS region are different. For example, the polarization may be changeable on a per-symbol basis. Since the polarizations of the two regions do not necessarily have to match, the matching of OCC/CS/polarization between the data region and the DMRS region may be configured more flexibly, as shown in Table 13. To this end, when the satellite indicates to the terminal the types of polarization that can be used by the terminal, the satellite may indicate separately the type of polarization that can be used in the data region and the type of polarization that can be used in the DMRS region. Accordingly, the terminal may receive indication information from the satellite that separately indicates the type of polarization available for the data region and the type of polarization available for the DMRS region. Then, the terminal may apply different polarizations to the transmission of data and to the transmission of DMRS according to the received indication information.

[Table 13]

| Data region OCC index (n) | Data region polarization | DMRS region OCC index (n) | DMRS region CS value (k) | DMRS region polarization |
|---|---|---|---|---|
| 1 | polarization 1 | 1 | 0 | polarization 1 |
| 1 | polarization 2 | 1 | 6 | polarization 1 |
| 2 | polarization 1 | 1 | 0 | polarization 2 |
| 2 | polarization 2 | 1 | 6 | polarization 2 |

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a satellite, comprising:

   transmitting, to a user equipment (UE), system information including information on polarization types supported by the satellite;
   receiving, from the UE, a polarization capability report including information on polarization types supported by the UE;
   indicating, to the UE, a polarization type to be used by the UE based on the received polarization capability report; and
   receiving a physical uplink control channel (PUCCH) transmitted from the UE using a polarization according to the indicated polarization type.

2. The method according to claim 1, wherein the indicating of the polarization type to be used by the UE to the UE based on the received polarization capability report comprises:

determining a polarization multiplexing group in which the UE is to be included based on the received polarization capability report;
identifying a polarization type to be used in the determined polarization multiplexing group;
determining the polarization type to be used by the UE based on the polarization type to be used in the determined polarization multiplexing group; and
indicating the determined polarization type to the UE.

3. The method according to claim 2, wherein when the polarization multiplexing group is a group using linear polarization, the polarization type to be used by the UE is a horizontal linear polarization or a vertical linear polarization, and when the polarization multiplexing group is a group using circular polarization, the polarization type to be used by the UE is a right-hand circular polarization or a left-hand circular polarization.

4. The method according to claim 2, wherein the determined polarization type is indicated by signaling configuring a format of the PUCCH, and the signaling includes a 1 bit indicating the determined polarization type.

5. The method according to claim 2, wherein the determined polarization type is indicated by signaling configuring a format of the PUCCH, and the signaling includes a 1 bit indicating the polarization type to be used in the polarization multiplexing group and a 1 bit indicating the polarization type to be used by the UE.

6. The method according to claim 2, wherein the determined polarization type is indicated by a number of available resource blocks (RBs), which is a parameter set by a higher layer to designate physical resources used for the PUCCH.

7. The method according to claim 2, wherein the determined polarization type is indicated by a least significant bit (LSB) value of a radio network temporary identifier (RNTI).

8. The method according to claim 2, wherein the determined polarization type includes a polarization type used in a data region and a polarization type used in a reference signal (RS) region.

9. A method of a user equipment (UE), comprising:

receiving, from a satellite, system information including information on polarization types supported by the satellite;
transmitting, to the satellite, a polarization capability report including information on polarization types supported by the UE;
receiving, from the satellite, indication information indicating a polarization type to be used by the UE; and
transmitting a physical uplink control channel (PUCCH) to the satellite using a polarization according to the polarization type indicated by the indication information.

10. The method according to claim 9, wherein the indication information is included in signaling configuring a format of the PUCCH.

11. The method according to claim 9, wherein the indication information corresponds to a number of available resource blocks (RBs), which is a parameter set by a higher layer to designate physical resources used for the PUCCH.

12. The method according to claim 9, wherein the indication information is a least significant bit (LSB) value of a radio network temporary identifier (RNTI).

13. The method according to claim 9, wherein the indication information includes information indicating a polarization type used in a data region and information indicating a polarization type used in a reference signal (RS) region, and the data region of the PUCCH is transmitted using a polarization according to the polarization type used in the data region, and the RS region of the PUCCH is transmitted using a polarization according to the polarization type used in the RS region.

14. A user equipment (UE) comprising at least one processor, wherein the at least one processor causes the UE to perform:

receiving, from a satellite, system information including information on polarization types supported by the satellite;
transmitting, to the satellite, a polarization capability report including information on polarization types supported by the UE;
receiving, from the satellite, indication information indicating a polarization type to be used by the UE; and
transmitting a physical uplink control channel (PUCCH) to the satellite using a polarization according to the polarization type indicated by the indication information.

15. The UE according to claim 14, wherein the indication information is included in signaling configuring a format of the PUCCH.

16. The UE according to claim 14, wherein the indication information corresponds to a number of available resource blocks (RBs), which is a parameter set by a higher layer to designate physical resources used for the PUCCH.

17. The UE according to claim 14, wherein the indication information is a least significant bit (LSB) value of a radio network temporary identifier (RNTI).

18. The UE according to claim 14, wherein the indication information includes information indicating a polarization type used in a data region and information indicating a polarization type used in a reference signal (RS) region, and in the transmitting of the PUCCH to the satellite, the at least one processor further causes the UE to perform: transmitting the data region of the PUCCH using a polarization according to the polarization type used in the data region, and transmitting the RS region of the PUCCH using a polarization according to the polarization type used in the RS region.

【FIG. 1A】

【FIG. 1B】

【FIG. 2A】

【FIG. 2B】

【FIG. 2C】

【FIG. 3】

【FIG. 4】

[FIG. 5A]

EP 4 648 518 A2

[FIG. 5B]

【FIG. 6A】

[FIG. 6B]

EP 4 648 518 A2

UE  satellite  gateway  core network (AMF)

NAS — NAS

base station

RRC — RRC | NGAP ↔ NGAP

PDCP — PDCP | SCTP ↔ SCTP

RLC — RLC | IP ↔ IP

MAC — MAC | L2 ↔ L2

PHY — PHY | L1 ↔ L1

NR-Uu
or 6G-Uu

NR-Uu
or 6G-Uu

NG-C
or 6G-C

⊠ : RF processing and frequency switching

【FIG. 7A】

【FIG. 7B】

【FIG. 8A】

DMRS

UCI

【FIG. 8B】

DMRS

UCI

【FIG. 9】

terminal                                                    satellite

system information ←                                        S900

polarization capability report →                           S910

polarization indication information ←                       S920

PUCCH transmission →                                        S930

【FIG. 10】

UCI bits
(terminal 1)

UCI bits
(terminal 2)

cyclic shift k1

cyclic shift k2

OCC n1

OCC n2

polarization 1

polarization 2